# EUROPÄISCHE PATENTSCHRIFT

(11) **EP 3 136 005 B1**
(45) Veröffentlichungstag und Bekanntmachung des Hinweises auf die Patenterteilung: **13.01.2021**
(21) Anmeldenummer: 16184240.6
(22) Anmeldetag: 03.07.2014
(51) Int. Cl.: F24D 3/08, F24D 3/18, F24D 17/02, F24F 3/06

(54) **VERFAHREN ZUM BETREIBEN EINER HEIZUNGSANLAGE**
METHOD FOR OPERATING A HEATING SYSTEM
PROCEDE DE FONCTIONNEMENT D'UNE INSTALLATION DE CHAUFFAGE

(30) Priorität: 13.09.2013 DE 102013218436
(43) Veröffentlichungstag der Anmeldung: 01.03.2017
(62) Teilanmeldung aus: 14175615.5
(73) Patentinhaber: Robert Bosch GmbH, 70442 Stuttgart (DE)
(72) Erfinder: Eklund, Gunnar, 57392 Tranas (SE); Tollsten, Mikael, 57393 Tranas (SE); Gustafsson, Kjell, 58336 Linkoeping (SE)

(56) Entgegenhaltungen:
- EP-A1- 2 413 042
- EP-A2- 2 461 109
- EP-A2- 2 538 146

## Beschreibung

Die Erfindung betrifft ein Verfahren zum Betreiben einer Heizungsanlage mit den Merkmalen des Oberbegriffs des Anspruchs 1.

Heizungsanlagen mit einer umschaltbaren Wärmequelle, die sowohl Wärme abgeben als auch aufnehmen kann und somit sowohl zum Kühlen als auch zum Erwärmen einer in einem Kühl- und Heizkreislauf geführten Wärmeträgerflüssigkeit dient, finden vielfältigen Einsatz beispielsweise zur Klimatisierung von Gebäuden. Als Wärmeträgerflüssigkeit wird dabei in der Regel Wasser verwendet, das als Wärmeträgerflüssigkeit dient.

Neben einer Raumklimatisierung erfolgt üblicherweise über die Heizungsanlage auch die Erwärmung von(Brauch-) Wasser. Das Wasser wird dabei in einem Warmwasserspeicher erwärmt, der dafür einen von der Wärmeträgerflüssigkeit durchströmbaren Wärmetauscher aufweist.

Problematisch bei derartigen Heizungsanlagen ist ein Umschalten insbesondere von einem Kühlmodus, indem eine Raumluft gekühlt wird, in einem Warmwassermodus, bei dem eine Erwärmung des im Warmwasserspeicher befindlichen Wassers vorgenommen werden soll.

Da die Wärmeträgerflüssigkeit im Kühlmodus mit relativ geringer Temperatur durch den Kühl- und Heizkreislauf geführt wird, wird sie bei bekannten Heizungsanlagen direkt nach dem Umschalten vom Kühlmodus in den Warmwassermodus mit der gleichen geringen Temperatur zum Warmwasserspeicher geführt und bewirkt dort zunächst eine Abkühlung. Erst wenn ausreichend Wärme von der Wärmequelle auf die Wärmeträgerflüssigkeit übertragen worden ist und nicht nur die Wärmeträgerflüssigkeit, sondern auch die entsprechenden Wärmetauscherflächen entsprechend erwärmt wurden, erfolgt die gewünschte Erwärmung des Warmwasserspeichers.

In entsprechender Weise kommt es beim Umschalten vom Warmwassermodus in den Kühlmodus dann dazu, dass zunächst noch warme Wärmeträgerflüssigkeit in den Klimatisierungszweig geführt wird, sodass zeitweise über den Wärmetauscher Wärme abgegeben wird, bis die Wärmeträgerflüssigkeit entsprechend abgekühlt worden ist.

Der Wärmetauscher kann beispielsweise mit einem Gebläse versehen sein, mit dessen Hilfe Raumluft über den Wärmetauscher gefördert wird. Beim Umschalten vom Warmwassermodus in den Kühlmodus erfolgt dann zunächst eine Erwärmung der über den Wärmetauscher geführten Luft, bis die Wärmeträgerflüssigkeit nach Umschalten der Wärmequelle entsprechend abgekühlt worden ist somit die gewünschte Abkühlung der Raumluft erfolgen kann.

Die EP 2538146 A2 offenbart eine Kalt-/Warmwasserversorgungsvorrichtung mit einer umschaltbaren Wärmequelle zum wahlweisen Kühlen oder Erwärmen einer Wärmeträgerflüssigkeit, mit einem Klimatisierungszweig, einem Warmwasserzweig sowie einem Bypass. Beim Umschalten von einem Kühlungsbetrieb des Klimatisierungszweig zu einem Warmwasserbetrieb des Warmwasserzweigs entscheidet eine Regelung, ob die Wärmeträgerflüssigkeit über den Bypass oder in den Warmwasserzweig geleitet wird.

Der Erfindung liegt nun die Aufgabe zugrunde, die Nachteile des Stands der Technik zu beseitigen und insbesondere einen Übergang beim Umschalten zwischen einem Kühlmodus, einem Warmwassermodus und einem Heizmodus zu verbessern. Damit soll insbesondere eine Komfortsteigerung erreicht werden.

Diese Aufgabe wird erfindungsgemäß durch ein Verfahren mit den Merkmalen des Anspruchs 1 gelöst. Vorteilhafte Ausgestaltungen finden sich in den Unteransprüchen.

Die Aufgabe wird durch ein Verfahren zum Betreiben einer Heizungsanlage gelöst, wobei es sich dabei um eine Heizungsanlage handelt mit mindestens einer zwischen einem Heizmodus und einem Kühlmodus umschaltbaren Wärmequelle zum wahlweisen Kühlen oder Erwärmen einer Wärmeträgerflüssigkeit, insbesondere von Wasser, die in einem Kühl- und Heizkreislauf geführt ist, in dem über einen Vorlauf und einen Rücklauf die Wärmequelle eingebunden ist, wobei der Kühl- und Heizkreislauf einen Klimatisierungszweig und einen Warmwasserzweig aufweist, die über ein erstes Mehrwegeventil mit dem Vorlauf verbunden sind und in den Rücklauf münden, wobei im Klimatisierungszweig mindestens ein Wärmetauscher zum Temperieren eines Raumklimas und im Warmwasserzweig mindestens ein Warmwasserspeicher angeordnet ist. Es ist vorgesehen, dass mindestens eine Bypassverbindung zwischen Vorlauf und Rücklauf parallel zum Klimatisierungszweig ausgebildet ist.

Die Heizungsanlage wird wahlweise in einem der folgenden Modi betrieben:
a) Einem Heizmodus, indem von der Wärmequelle und/oder dem Zuheizer Wärme an die Wärmeträgerflüssigkeit abgegeben und im Klimatisierungszweig über den mindestens einen Wärmetauscher abgegeben wird, wobei der Warmwasserzweig geschlossen ist,
b) einem Kühlmodus, indem von der Wärmequelle Wärme von der Wärmeträgerflüssigkeit aufgenommen wird, die im Klimatisierungszweig über den mindestens einen Wärmetauscher an die Wärmeträgerflüssigkeit übertragen wird, wobei der Warmwasserzweig geschlossen ist,
c) einem Warmwassermodus, indem von der Wärmequelle und/oder dem Zuheizer Wärme an die Wärmeträgerflüssigkeit abgegeben und im Warmwasserzweig an den Warmwasserspeicher abgegeben wird, wobei der Klimatisierungszweig geschlossen ist,
d) einem ersten Zwischenmodus zum schnellen Abkühlen der Wärmeträgerflüssigkeit beim Umschalten vom Warmwassermodus in den Kühlmodus, indem von der Wärmequelle Wärme von der Wärmeträgerflüssigkeit aufgenommen wird, wobei der Warmwasserzweig geschlossen und die Wärmeträgerflüssigkeit durch einen Vorlauf, mindestens eine Bypassverbindung und einen Rücklauf zirkuliert wird.

Gekennzeichnet ist das Verfahren durch einen dritten Zwischenmodus zum Temperieren der Wärmeträgerflüssigkeit beim Umschalten vom Warmwassermodus in den Heizmodus, indem Wärme von der Wärmequelle und/oder vom Zuheizer an die Wärmeträgerflüssigkeit abgegeben wird, wobei der Warmwasserzweig geschlossen wird und durch den Klimatisierungszweig über die Bypassverbindung eine größere Wärmeträgerflüssigkeitsmenge zirkuliert wird, als durch den Rücklauf zur Wärmequelle zurückgeführt wird. Die Heizungsanlage kann dann auch im dritten Zwischenmodus betrieben werden. Dadurch kann dem Umstand Rechnung getragen werden, dass im Warmwassermodus die Wärmequelle häufig mit maximaler Leistung betrieben wird, also sehr viel Wärme an die Wärmeträgerflüssigkeit abgibt, während im Heizmodus häufig eine geringere Temperatur der Wärmeträgerflüssigkeit gewünscht ist. Durch den dritten Zwischenmodus lässt sich dann ein Überschwingen der Temperatur der Wärmeträgerflüssigkeit im Klimatisierungszweig vermeiden, das zum einen eine Komfortbeeinträchtigung darstellen würde und zum anderen das Auftreten von Geräuschen aufgrund von Wärmedehnungen der verwendeten Materialien hervorrufen kann. Ein Teil der Wärmeträgerflüssigkeit kann dabei mehrfach durch den Klimatisierungszweig geführt werden, bevor es erneut an der Wärmequelle vorbeikommt, um dort Wärme aufzunehmen. Dadurch lässt sich die Temperatur der Wärmeträgerflüssigkeit im Klimatisierungszweig unterhalb einer Temperatur der Wärmeträgerflüssigkeit im Vorlauf halten, bis die Leistung der Wärmequelle soweit reduziert ist, dass die abgegebene Wärme der im Klimatisierungszweig abgegebenen Wärme entspricht.

Als umschaltbare Wärmequelle wird bevorzugterweise eine Wärmepumpe verwendet, die insbesondere als Luftwasserwärmepumpe ausgebildet ist. Eine Wärmepumpe lässt sich ohne großen Aufwand sowohl zur Wärmeaufnahme als auch zur Wärmeabgabe nutzen, also zum wahlweisen Kühlen oder Erwärmen einer Wärmeträgerflüssigkeit. Dabei besitzt eine Wärmepumpe in der Regel einen relativ hohen Wirkungsgrad und damit einen geringen Ressourcenverbrauch.

Bevorzugterweise steht weiter noch folgender Modus zum Betreiben der Heizungsanlage zur Verfügung:
e) einen zweiten Zwischenmodus zum schnellen Erwärmen der Wärmeträgerflüssigkeit beim Umschalten vom Kühlmodus in den Warmwassermodus, indem von der Wärmequelle und/oder dem Zuheizer Wärme an die Wärmeträgerflüssigkeit abgegeben wird, wobei bei geschlossenem Warmwasserzweig die Wärmeträgerflüssigkeit durch den Vorlauf, die Bypassverbindung und den Rücklauf zirkuliert wird.

Über diese Bypassverbindung lässt sich dann eine Zirkulation der Wärmeträgerflüssigkeit im Kühl- und Heizkreislauf aufrechterhalten, ohne dass der Klimatisierungszweig und/oder der Warmwasserzweig durchströmt werden. Dadurch kann die Heizungsanlage in Zwischenmodi betrieben werden, in denen die Wärmeträgerflüssigkeit nur durch einen Teil des Kühl- und Heizkreislaufes (5) zirkuliert. Somit lässt sich die Menge an Wärmeträgerflüssigkeit, die beim Umschalten zwischen Kühlmodus, Heizmodus und Warmwassermodus auf eine neue Temperatur gebracht werden muss, verringern. Auch die Anzahl durchströmter Flächen und Wärmetauscher wird so minimiert. Beispielsweise erfolgt beim Umschalten vom Kühlmodus in den Warmwassermodus solange eine Zirkulation der Wärmeträgerflüssigkeit über Vorlauf, Bypassverbindung und Rücklauf sowie die Wärmequelle, bis die Wärmeträgerflüssigkeit auf die gewünschte Temperatur erwärmt worden ist, während die Wärmeträgerflüssigkeit, die sich im Klimatisierungszweig befindet, im Wesentlichen seine kühlere Temperatur beibehält. Im Warmwasserzweig befindet sich in der Regel eher wärmere Wärmeträgerflüssigkeit, da dort keine gekühlte Wärmeträgerflüssigkeit gefördert werden soll. Somit erfolgt nach Öffnen des Warmwasserzweigs sehr schnell ein Aufwärmen des Warmwasserspeichers. Im umgekehrten Fall erfolgt erst dann ein erneuter Zulauf von Wärmeträgerflüssigkeit in den Klimatisierungszweig, wenn diese auf die entsprechende niedrige Temperatur gebracht worden ist.

Durch das Vorsehen der Zwischenmodi lässt sich die Menge an Wärmeträgerflüssigkeit, die auf die kühlere Temperatur abgekühlt beziehungsweise auf eine höhere Temperatur aufgewärmt werden muss, sehr stark verringern. Darüber hinaus sind auch nicht alle Wärmetauscher und Leitungen auf eine neue Temperatur zu bringen. Vielmehr kann beispielsweise beim Umschalten auf den Warmwassermodus der gesamte Klimatisierungszweig mit der darin befindlichen Wärmeträgerflüssigkeit auf seiner vorherigen Temperatur verbleiben, während nur die im Vorlauf, in der Bypassverbindung und im Rücklauf befindliche Wärmeträgerflüssigkeit neu temperiert werden muss. Die Zeit und die erforderliche Energie beim Umschalten zwischen Heizmodus, Kühlmodus und Warmwassermodus lassen sich so reduzieren und damit nicht nur ein Wirkungsgrad verbessern, sondern auch ein Komfort erhöhen.

Dabei wird im ersten Zwischenmodus eine Pumpenleistung der ersten, im Rücklauf angeordneten Pumpe bevorzugterweise auf ein Minimum gesetzt, die Pumpe also mit einer geringen Förderleistung betrieben. Dementsprechend ist eine Strömungsgeschwindigkeit der Wärmeträgerflüssigkeit relativ gering, sodass zum einen viel Wärme von der Wärmeträgerflüssigkeit auf die Wärmequelle übergeben werden kann und zum anderen eine Beeinträchtigung der im Klimatisierungszweig befindlichen Wärmeträgerflüssigkeit gering gehalten wird, auch wenn dieser nicht durch Stellventile geschlossen wird.

Eine besonders einfache Ausgestaltung sieht dabei vor, dass im dritten Zwischenmodus eine im Klimatisierungszweig angeordnete zweite Pumpe mit mehr Leistung betrieben wird, als eine im Rücklauf angeordnete erste Pumpe, wobei die erste Pumpe insbesondere mit einer minimalen Leistung betrieben wird. Dadurch ist es relativ einfach möglich, durch den Klimatisierungszweig eine größere Menge an Wärmeträgerflüssigkeit zu zirkulieren als über Rücklauf und Vorlauf an der Wärmequelle vorbeizuführen.
mindestens einen Wärmetauscher an die Wärmeträgerflüssigkeit übertragen wird, wobei der Warmwasserzweig geschlossen ist,
c) einem Warmwassermodus, indem von der Wärmequelle und/oder dem Zuheizer Wärme an die Wärmeträgerflüssigkeit abgegeben und im Warmwasserzweig an den Warmwasserspeicher abgegeben wird, wobei der Klimatisierungszweig geschlossen ist,
d) einem ersten Zwischenmodus zum schnellen Abkühlen der Wärmeträgerflüssigkeit beim Umschalten vom Warmwassermodus in den Kühlmodus, indem von der Wärmequelle Wärme von der Wärmeträgerflüssigkeit aufgenommen wird, wobei der Warmwasserzweig geschlossen und die Wärmeträgerflüssigkeit durch einen Vorlauf, mindestens eine Bypassverbindung und einen Rücklauf zirkuliert wird.

Dabei ist steht bevorzugterweise noch folgender Modus zum Betreiben der Heizungsanlage zur Verfügung:
e) einen zweiten Zwischenmodus zum schnellen Erwärmen der Wärmeträgerflüssigkeit beim Umschalten vom Kühlmodus in den Warmwassermodus, indem von der Wärmequelle und/oder dem Zuheizer Wärme an die Wärmeträgerflüssigkeit abgegeben wird, wobei bei geschlossenem Warmwasserzweig die Wärmeträgerflüssigkeit durch den Vorlauf, die Bypassverbindung und den Rücklauf zirkuliert wird.

Durch das Vorsehen der Zwischenmodi lässt sich die Menge an Wärmeträgerflüssigkeit, die auf die kühlere Temperatur abgekühlt beziehungsweise auf eine höhere Temperatur aufgewärmt werden muss, sehr stark verringern. Darüber hinaus sind auch nicht alle Wärmetauscher und Leitungen auf eine neue Temperatur zu bringen. Vielmehr kann beispielsweise beim Umschalten auf den Warmwassermodus der gesamte Klimatisierungszweig mit der darin befindlichen Wärmeträgerflüssigkeit auf seiner vorherigen Temperatur verbleiben, während nur die im Vorlauf, in der Bypassverbindung und im Rücklauf befindliche Wärmeträgerflüssigkeit neu temperiert werden muss. Die Zeit und die erforderliche Energie beim Umschalten zwischen Heizmodus, Kühlmodus und Warmwassermodus lassen sich so reduzieren und damit nicht nur ein Wirkungsgrad verbessern, sondern auch ein Komfort erhöhen.

Dabei wird im ersten Zwischenmodus eine Pumpenleistung der ersten, im Rücklauf angeordneten Pumpe bevorzugterweise auf ein Minimum gesetzt, die Pumpe also mit einer geringen Förderleistung betrieben. Dementsprechend ist eine Strömungsgeschwindigkeit der Wärmeträgerflüssigkeit relativ gering, sodass zum einen viel Wärme von der Wärmeträgerflüssigkeit auf die Wärmequelle übergeben werden kann und zum anderen eine Beeinträchtigung der im Klimatisierungszweig befindlichen Wärmeträgerflüssigkeit gering gehalten wird, auch wenn dieser nicht durch Stellventile geschlossen wird.

Bevorzugterweise ist noch ein dritter Zwischenmodus zum Temperieren der Wärmeträgerflüssigkeit beim Umschalten vom Warmwassermodus in den Heizmodus vorgesehen, indem Wärme von der Wärmequelle und/oder vom Zuheizer an die Wärmeträgerflüssigkeit abgegeben wird, wobei der Warmwasserzweig geschlossen wird und durch den Klimatisierungszweig über die Bypassverbindung eine größere Wärmeträgerflüssigkeitsmenge zirkuliert wird, als durch den Rücklauf zur Wärmequelle zurückgeführt wird. Die Heizungsanlage kann dann auch im dritten Zwischenmodus betrieben werden. Dadurch kann dem Umstand Rechnung getragen werden, dass im Warmwassermodus die Wärmequelle häufig mit maximaler Leistung betrieben wird, also sehr viel Wärme an die Wärmeträgerflüssigkeit abgibt, während im Heizmodus häufig eine geringere Temperatur der Wärmeträgerflüssigkeit gewünscht ist. Durch den dritten Zwischenmodus lässt sich dann ein Überschwingen der Temperatur der Wärmeträgerflüssigkeit im Klimatisierungszweig vermeiden, das zum einen eine Komfortbeeinträchtigung darstellen würde und zum anderen das Auftreten von Geräuschen aufgrund von Wärmedehnungen der verwendeten Materialien hervorrufen kann. Ein Teil der Wärmeträgerflüssigkeit kann dabei mehrfach durch den Klimatisierungszweig geführt werden, bevor es erneut an der Wärmequelle vorbeikommt, um dort Wärme aufzunehmen. Dadurch lässt sich die Temperatur der Wärmeträgerflüssigkeit im Klimatisierungszweig unterhalb einer Temperatur der Wärmeträgerflüssigkeit im Vorlauf halten, bis die Leistung der Wärmequelle soweit reduziert ist, dass die abgegebene Wärme der im Klimatisierungszweig abgegebenen Wärme entspricht.

Eine besonders einfache Ausgestaltung sieht dabei vor, dass im dritten Zwischenmodus eine im Klimatisierungszweig angeordnete zweite Pumpe mit mehr Leistung betrieben wird, als eine im Rücklauf angeordnete erste Pumpe, wobei die erste Pumpe insbesondere mit einer minimalen Leistung betrieben wird. Dadurch ist es relativ einfach möglich, durch den Klimatisierungszweig eine größere Menge an Wärmeträgerflüssigkeit zu zirkulieren als über Rücklauf und Vorlauf an der Wärmequelle vorbeizuführen.

In einer bevorzugten Ausgestaltung wird im ersten Zwischenmodus und/oder im zweiten Zwischenmodus und/oder im dritten Zwischenmodus eine schaltbare Bypassverbindung geöffnet. In einer dazu gegebenenfalls parallel verlaufenden offenen Bypassverbindung kann dann ein Zwischenspeicher angeordnet sein, um das Volumen der Wärmeträgerflüssigkeit zu vergrößern und damit eine größere Wärmekapazität bereitzustellen.

Vorzugsweise wird im ersten und zweiten Zwischenmodus die zweite im Klimatisierungszweig angeordnete Pumpe gestoppt. Dadurch wird im Klimatisierungszweig im Wesentlichen die Wärmeträgerflüssigkeit gehalten, die die entsprechende Temperatur aufweist. Eine Vermischung mit der über die Bypassverbindung im Zwischenmodus geführten Wärmeträgerflüssigkeit wird dann gering gehalten. Außerdem wird durch Stoppen der zweiten Pumpe eine Energieaufnahme der Heizungsanlage minimiert.

Vorzugsweise wird vom zweiten Zwischenmodus in den Warmwassermodus umgeschaltet, wenn die Wärmeträgerflüssigkeit im Rücklauf oder im Vorlauf zumindest eine Warmwasserspeichertemperatur erreicht hat. Die Warmwasserspeichertemperatur kann dabei aktuell gemessen werden oder als Wert hinterlegt sein. Damit wird sichergestellt, dass die Wärmeträgerflüssigkeit aus dem Warmwasserspeicher zumindest keine Wärme aufnimmt, sondern direkt zur Erwärmung des im Warmwasserspeicher gespeicherten Wassers dient.

Vorzugsweise wird im zweiten Zwischenmodus die erste Pumpe zwischen einer Minimalleistung bei einer Temperatur der Wärmeträgerflüssigkeit im Rücklauf oder im Vorlauf unterhalb einer unteren Grenztemperatur und einer Maximalleistung bei einer Temperatur der Wärmeträgerflüssigkeit in Rücklauf oberhalb einer oberen Grenztemperatur betrieben, wobei ein Zusammenhang zwischen der Temperatur der Wärmeträgerflüssigkeit im Rücklauf und der Leistung der ersten Pumpe insbesondere linear ist. Über die Leistung der Pumpe lässt sich so eine Temperaturregelung erreichen, wobei diese aufgrund des linearen Zusammenhangs relativ einfach aufgebaut sein kann. Die untere Grenztemperatur und/oder die obere Grenztemperatur können dabei insbesondere durch einen Benutzer vorgegeben und entsprechend hinterlegt werden.

Bevorzugterweise wird vom ersten Zwischenmodus in den Kühlmodus umgeschaltet, wenn eine Temperatur der Wärmeträgerflüssigkeit im Rücklauf um einen vorgebbaren Betrag unterhalb einer Temperatur der Wärmeträgerflüssigkeit im Klimatisierungszweig liegt. Ein unnötiges Erwärmen der Wärmeträgerflüssigkeit im Klimatisierungszweig, und damit eine Wärmeabgabe im Kühlmodus über den Wärmetauscher des Klimatisierungszweigs werden so vermieden. Dementsprechend ergibt sich ein hoher Wirkungsgrad bei einem hohen Komfort.

Vorzugsweise wird die Heizungsanlage wahlweise in einem Drosselungsmodus betrieben, indem eine Leistung der Wärmequelle reduziert wird, wobei die erste Pumpe zwischen einer Minimalleistung bei einer Temperatur der Wärmeträgerflüssigkeit im Rücklauf unterhalb einer unteren Grenztemperatur und einer Maximalleistung bei einer Temperatur der Wärmeträgerflüssigkeit im Rücklauf oberhalb einer oberen Grenztemperatur betrieben wird, wobei ein Zusammenhang zwischen der Temperatur der Wärmeträgerflüssigkeit im Rücklauf und der Leistung der ersten Pumpe insbesondere linear ist. Der Drosselungsmodus kann dann parallel zum dritten Zwischenmodus ablaufen und dazu dienen, die von der Wärmequelle abgegebene Wärme zu reduzieren. Die im dritten Modus über die Bypassverbindung geführte Wärmeträgerflüssigkeit kann dann temperaturgeregelt auf eine gewünschte Temperatur abgekühlt werden und die von der Wärmequelle bereitgestellte Wärme an die von den Wärmetauschern im Klimatisierungszweig abgegebene Wärme angeglichen werden. Sobald die Temperatur der Wärmeträgerflüssigkeit im Rücklauf in etwa einer Temperatur der Wärmeträgerflüssigkeit im Klimatisierungszweig entspricht, kann der Drosselungsmodus beendet und die Heizungsanlage alleine im Heizmodus weiter betrieben werden. Die obere und/oder untere Grenztemperatur kann dabei beispielsweise durch einen Benutzer individuell vorgegeben werden.

Die Erfindung wird im Folgenden anhand bevorzugter Ausführungsbeispiele in Verbindung mit den Zeichnungen näher beschrieben. Hierin zeigen in schematischer Ansicht:
- Fig. 1: eine Heizungsanlage mit einer offenen Bypassverbindung,
- Fig. 2: eine Heizungsanlage mit einer offenen Bypassverbindung und einer schaltbaren Bypassverbindung und
- Fig. 3: eine weitere Ausgestaltung einer Heizungsanlage mit einer offenen Bypassverbindung und einer schaltbaren Bypassverbindung.

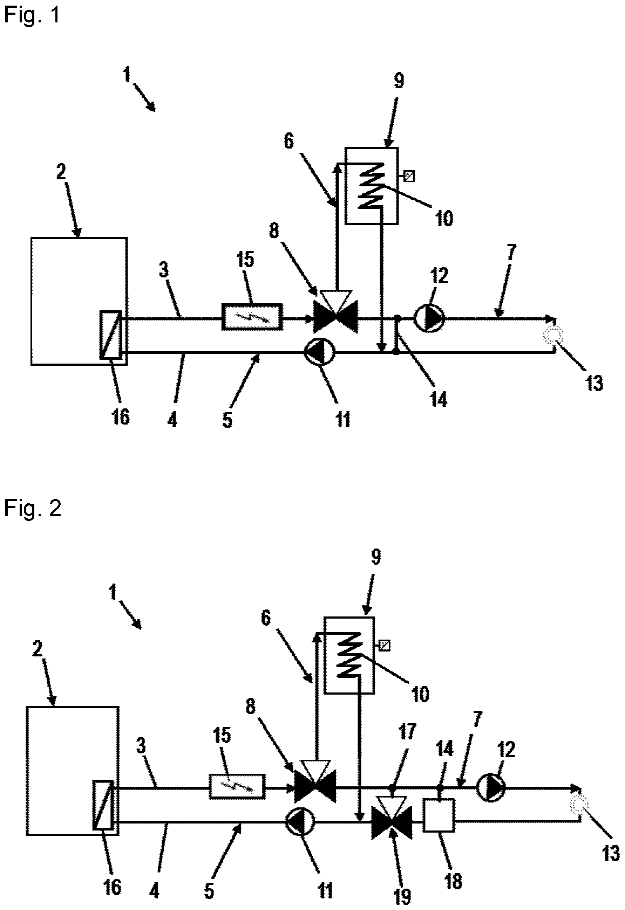

In Figur 1 ist eine Heizungsanlage 1 schematisch dargestellt, die eine zwischen einem Heizmodus und einem Kühlmodus umschaltbare Wärmequelle 2 aufweist, die über einen Vorlauf 3 und einen Rücklauf 4 in einen Kühl- und Heizkreislauf 5 eingebunden ist. Der Kühl- und Heizkreislauf 5 weist einen Warmwasserzweig 6 und einen Klimatisierungszweig 7 auf, die über ein Mehrwegeventil 8, das bei diesem Ausführungsbeispiel als Dreiwegeventil ausgebildet ist, miteinander und mit dem Vorlauf 3 verbunden sind. Dabei verlaufen der Warmwasserzweig 6 und der Klimatisierungszweig 7 parallel zueinander, sodass je nach Stellung des Mehrwegeventils 8 die vom Vorlauf kommende Wärmeträgerflüssigkeit durch den Warmwasserzweig 6 zum Rücklauf 4 oder durch den Klimatisierungszweig 7 zum Rücklauf 4 geführt wird.

Im Warmwasserzweig 6 ist ein Warmwasserspeicher 9 angeordnet, in dem Wasser erwärmt und gespeichert werden kann. Dafür kann im Warmwasserspeicher 9 über einen Wärmetauscher 10 Wärme von der Wärmeträgerflüssigkeit aus dem Warmwasserzweig 6 auf das Wasser im Warmwasserspeicher 9 übertragen werden.

Zum Sicherstellen einer Zirkulation der Wärmeträgerflüssigkeit im Kühl- und Heizkreislauf 5 ist im Rücklauf 4 eine erste Pumpe 11 angeordnet. Eine zweite Pumpe 12 befindet sich im Klimatisierungszweig 7. In Reihe mit der zweiten Pumpe 12 ist dabei ein Wärmetauscher 13 im Klimatisierungszweig 7 angeordnet, der zum Wärmeaustausch zwischen der Wärmeträgerflüssigkeit und beispielsweise einer Raumluft dient. Anstelle eines Wärmetauschers 13 können dabei auch mehrere Wärmetauscher vorgesehen werden.

Parallel zum Klimatisierungszweig 7 ist eine Bypassverbindung 14 vorgesehen, die den Vorlauf 3 mit dem Rücklauf 4 verbindet. Dabei handelt es sich um eine offene Bypassverbindung, die immer offen ist, also nicht beispielsweise durch ein Ventil geschlossen wird. Mithilfe der offenen Bypassverbindung kann dabei der Klimatisierungszweig mit der zweiten Pumpe 12 und dem Wärmetauscher 13 umgangen werden. Dabei ist die offene Bypassverbindung 14 allerdings in Strömungsrichtung hinter dem Mehrwegeventil 8 angeordnet, sodass bei einer Schaltung des Mehrwegeventils derart, dass die Wärmeträgerflüssigkeit durch den Warmwasserzweig geleitet wird und nicht durch den Klimatisierungszweig 7 geführt werden soll, nicht aktiv ist.

Im Vorlauf 3 ist noch ein optionaler Zuheizer 15 angeordnet, mit dem zusätzliche Wärme in die Wärmeträgerflüssigkeit eingebracht werden kann, falls eine besonders schnelle Erwärmung der Wärmeträgerflüssigkeit erforderlich ist oder falls von der Wärmequelle 2 nicht ausreichend Wärme zur Verfügung gestellt werden kann. Dies kann beispielsweise passieren, wenn die umschaltbare Wärmequelle 2 als Wärmepumpe, insbesondere als Luftwasserwärmepumpe ausgebildet ist. Gerade bei kompakten Ausgestaltungen der Wärmepumpe, die dann beispielsweise vollständig außerhalb eines Gebäudes angeordnet ist, kann bei sehr kalten Außentemperaturen die Leistung möglicherweise nicht ausreichend sein, um ausreichend Wärme bereitzustellen.

Gezeigt ist von der Wärmequelle 2 nur ein Wärmetauscher 16, der bei einer Ausbildung der Wärmequelle 2 als Kondensator beziehungsweise Verdampfer dient. Dementsprechend ist Wärme zwischen dem Wärmetauscher 16 und der durch Rücklauf 4 und Vorlauf 3 geführten Wärmeträgerflüssigkeit übertragbar.

Die Heizungsanlage 1 kann nun in verschiedenen Modi betrieben werden. In einem Heizmodus wird dabei von der Wärmequelle 2 Wärme bereitgestellt und an die Wärmeträgerflüssigkeit übertragen, die dann über den Vorlauf durch das Mehrwegeventil 8 in den Klimatisierungszweig 7 geführt wird. Dafür wird sowohl die erste Pumpe 11 als auch die zweite Pumpe 12 betrieben. Die Wärmeträgerflüssigkeit gelangt im Klimatisierungszweig dann zum mindestens einen Wärmetauscher 13 und gibt dort Wärme an die Umgebung ab. Anschließend wird sie in abgekühlter Form über den Rücklauf 4 zurück zur Wärmequelle 2 geleitet, durch die sie erneut erwärmt wird. Die Wärmeträgerflüssigkeit ist dabei bevorzugterweise Wasser. Unterschiedliche Fördergeschwindigkeiten der ersten Pumpe 11 und der zweiten Pumpe 12 können dann über die Bypassverbindung 14 ausgeglichen werden, ohne dass es zu Druckschwankungen kommt.

Der Kühlmodus der Heizungsanlage 1 unterscheidet sich vom Heizmodus nur darin, dass von der Wärmequelle 2 die Wärme nicht an die Wärmeträgerflüssigkeit abgegeben wird, sondern von der Wärmeträgerflüssigkeit aufgenommen wird, also eine Kühlung der Wärmeträgerflüssigkeit erfolgt. Dementsprechend erfolgt auch über den Wärmetauscher 13 im Klimatisierungszweig eine Wärmeaufnahme aus der Umgebung, die dadurch entsprechend gekühlt wird. Die Wärmeträgerflüssigkeit wird dann vom Wärmetauscher 13 mit höherer Temperatur über den Rücklauf 4 zur Wärmequelle 2 geführt, als sie über den Vorlauf 3 in den Klimatisierungszweig 7 transportiert wird.

Sowohl im Heizmodus als auch im Kühlmodus ist das Mehrwegeventil 8 derartig geschaltet, dass die Wärmeträgerflüssigkeit vom Vorlauf 3 in den Klimatisierungszweig 7 gelangt, während der Warmwasserzweig 6 geschlossen ist.

Im Warmwassermodus, der dazu dient, im Warmwasserspeicher 9 befindliches Wasser zu erwärmen, wird das Mehrwegeventil derartig geschaltet, dass die über den Vorlauf kommende Wärmeträgerflüssigkeit in den Warmwasserzweig 6 geleitet wird, während der Klimatisierungszweig 7 gesperrt ist. Von der Wärmequelle 2 auf die Wärmeträgerflüssigkeit übertragene Wärme kann so über den Wärmetauscher 10 im Warmwasserspeicher 9 auf das in diesem befindliche Wasser übertragen werden und dies auf die gewünschte Temperatur von beispielsweise über 60° erhitzt werden. Zur Förderung der Wärmeträgerflüssigkeit im Warmwassermodus dient dabei nur die erste Pumpe 11, während die zweite Pumpe 12, die im Klimatisierungszweig 7 angeordnet ist, gestoppt werden kann. Die im Klimatisierungszweig 7 befindliche Wärmeträgerflüssigkeit bleibt dann während des Warmwassermodus relativ unbeweglich und mit im Wesentlichen gleichbleibender Temperatur im Klimatisierungszweig 7.

Der Heizmodus, der Kühlmodus und der Warmwassermodus erfordern jeweils unterschiedliche Temperaturen der Wärmeträgerflüssigkeit. Dabei sollte die Temperatur der Wärmeträgerflüssigkeit im Warmwassermodus üblicherweise am höchsten und im Kühlmodus am niedrigsten sein. Dafür erfolgt durch die Wärmequelle 2 im Heizmodus und im Warmwassermodus eine Wärmeabgabe und im Kühlmodus eine Wärmeaufnahme. Da die Wärmeträgerflüssigkeit als Wärmeträger dient, ist jedoch beim Umschalten zwischen den einzelnen Modi jeweils ein Erwärmen der Wärmeträgerflüssigkeit beziehungsweise Abkühlen der Wärmeträgerflüssigkeit erforderlich. Um die Menge gering zu halten, ist für den Betrieb der Heizungsanlage vorgesehen, verschiedene Zwischenmodi zu verwenden. Wenn vom Warmwassermodus beispielsweise in den Kühlmodus umgeschaltet werden soll, erfolgt zunächst ein Betrieb in einem ersten Zwischenmodus, bei dem die Wärmeträgerflüssigkeit durch Wärmeaufnahme der Wärmequelle 2 zunächst gekühlt wird und solange über das Mehrwegeventil 8 und die Bypassverbindung 14 direkt wieder in den Rücklauf 4 gefördert wird, bis eine Temperatur der Wärmeträgerflüssigkeit im Rücklauf 4 geringer ist als eine Temperatur der im Klimatisierungszweig 7 befindlichen Wärmeträgerflüssigkeit. Dafür wird der Warmwasserzweig 6 über das Mehrwegeventil 8 gesperrt.

Die Zirkulation der Wärmeträgerflüssigkeit erfolgt mit Hilfe der ersten Pumpe 11, die dabei beispielsweise mit einer minimalen Leistung betrieben wird, sodass die Wärmeträgerflüssigkeit eine relativ geringe Strömungsgeschwindigkeit annimmt. Erst wenn die über Vorlauf 3, Bypassverbindung 14 und Rücklauf 4 geförderte Wärmeträgerflüssigkeit ausreichend abgekühlt ist, wird die zweite Pumpe 12 im Klimatisierungszweig 7 gestartet und der Kühlmodus begonnen. Damit wird vermieden, dass im Kühlmodus zu warme Wärmeträgerflüssigkeit zu dem Wärmetauscher 13 gelangt. Vielmehr ist sehr schnell wieder eine Abkühlung über den Wärmetauscher 13 möglich.

Zum Umschalten vom Kühlmodus in den Warmwassermodus oder Heizmodus ist ein zweiter Zwischenmodus vorgesehen, indem von der Wärmequelle 2 Wärme an die Wärmeträgerflüssigkeit abgegeben wird und die Wärmeträgerflüssigkeit solange über Vorlauf 3, Bypassverbindung 14 und Rücklauf 4 mit Hilfe der ersten Pumpe 11 zirkuliert wird, bis die Temperatur der Wärmeträgerflüssigkeit ausreichend angestiegen ist und insbesondere oberhalb einer Temperatur des im Warmwasserspeicher 9 befindlichen Wassers liegt. Im zweiten Zwischenmodus wird dafür über das Mehrwegeventil 8 der Warmwasserzweig 6 abgesperrt und die zweite Pumpe 12 gestoppt.

Zum Umschalten vom Warmwassermodus in den Heizmodus ist ein dritter Zwischenmodus vorgesehen, da die Wärmeträgerflüssigkeit im Warmwassermodus in der Regel auf eine Temperatur erhöht wird, die oberhalb einer für den Heizmodus gewünschten Temperatur liegt. In diesem dritten Zwischenmodus wird weiterhin Wärme von der Wärmequelle an die Wärmeträgerflüssigkeit abgegeben und der Warmwasserzweig geschlossen, während der Klimatisierungszweig 7 geöffnet wird. Dabei wird allerdings die zweite Pumpe 12 mit einer höheren Leistung betrieben als die erste Pumpe 11, sodass über den Vorlauf 3 und den Rücklauf 4 eine geringere Wärmeträgerflüssigkeitsmenge fließt, die entsprechend Wärme von der Wärmequelle 2 aufnimmt, als durch den Klimatisierungszweig 7 und die Bypassverbindung 14 gefördert wird. Dementsprechend erfolgt keine übermäßige Erhöhung der Temperatur der Wärmeträgerflüssigkeit im Klimatisierungszweigs 7 durch die vorher im Warmwassermodus stark aufgewärmte Wärmeträgerflüssigkeit.

Beim dritten Zwischenmodus kann vorgesehen sein, diesen mit einem Drosselmodus zu kombinieren, in dem allmählich die Leistung der Wärmequelle beziehungsweise die abgegebene Wärme der Wärmequelle reduziert wird. Dabei kann eine Regelung der Pumpe auf Grundlage der Temperatur der Wärmeträgerflüssigkeit im Rücklauf 4 erfolgen.

Figur 2 zeigt nun eine weitere Ausgestaltung der Heizungsanlage 1, bei der nicht nur eine offene Bypassverbindung 14, sondern parallel dazu eine schaltbare Bypassverbindung 17 vorgesehen ist. Die schaltbare Bypassverbindung 17 verläuft dabei parallel zur offenen Bypassverbindung 14. In der offenen Bypassverbindung 14 ist dabei ein Zwischenspeicher 18 angeordnet, der eine zusätzliche Menge an Wärmeträgerflüssigkeit aufnehmen kann, um so die Wärmekapazität der Heizungsanlage zu erhöhen.

Die schaltbare Bypassverbindung 17 ist dabei über ein zweites Mehrwegeventil 19 in den Kühl- und Heizkreislauf 5 eingebunden, das im vorliegenden Fall rücklaufseitig ausgebildet ist. Über das zweite Mehrwegeventil 19 kann die schaltbare Bypassverbindung 17 geöffnet oder geschlossen werden.

Durch das Vorsehen des Zwischenspeichers 18 ist der Betrieb der Heizungsanlage in den Zwischenmodi, wie sie oben beschrieben wurden, nicht ohne weiteres möglich. Vielmehr ist dazu die schaltbare Bypassverbindung 17 notwendig. Die schaltbare Bypassverbindung 17 wird dafür in den Zwischenmodi geöffnet, im Heizmodus, im Kühlmodus und Warmwassermodus aber geschlossen. Im Übrigen verläuft der Betrieb der Heizungsanlage 1 nach Figur 2 ebenso wie nach Figur 1.

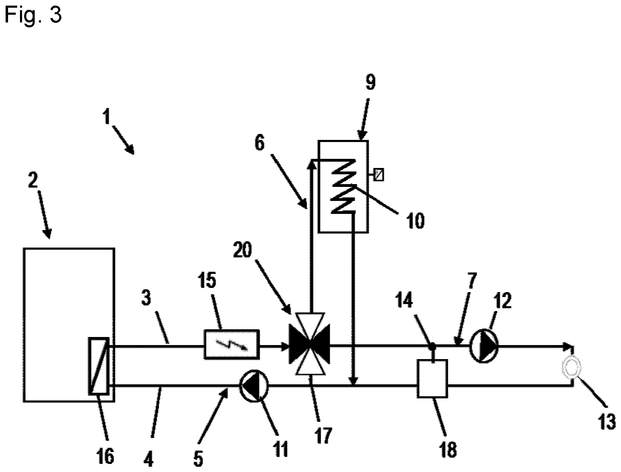

Figur 3 zeigt eine weitere Ausgestaltung der Heizungsanlage 1, die sich darin von der Heizungsanlage nach Figur 2 unterscheidet, dass anstelle zweier Dreiwegeventile 8, 19 ein einziges Vierwegeventil 20 vorgesehen ist. Das Vierwegeventil 20 stellt dabei eine Kombination der vorherigen Mehrwegeventile 8 und 19 dar. Der Betrieb der Heizungsanlage 1 entspricht dementsprechend dem Betrieb nach Figur 2.

Durch die erfindungsgemäße Ausgestaltung lässt sich die Menge an Wärmeträgerflüssigkeit, die beim Umschalten zwischen Heizmodus, Kühlmodus und Warmwassermodus temperiert werden muss, drastisch reduzieren. Auch müssen nicht alle Komponenten der Heizungsanlage jeweils an die neue Temperatur herangeführt werden. Vielmehr beschränkt sich dies auf einen relativ kleinen Bereich der Heizungsanlage, insbesondere auf Vorlauf, Rücklauf und die Wärmequelle selbst. Durch das Vorsehen zusätzlicher Temperatursensoren beispielsweise im Vorlauf 3, im Warmwasserspeicher 9, im Klimatisierungszweig 7 und/oder im Rücklauf 4 lässt sich dabei eine relativ genaue Regelung der Temperatur der Wärmeträgerflüssigkeit erreichen.

Die Erfindung ist nicht auf eines der vorbeschriebenen Ausführungsbeispiele beschränkt, sondern in vielfältiger Weise abwandelbar.

## Patentansprüche

1. Verfahren zum Betreiben einer Heizungsanlage (1) mit mindestens einer zwischen einem Heizmodus und einem Kühlmodus umschaltbaren Wärmequelle (2) zum wahlweisen Kühlen oder Erwärmen einer Wärmeträgerflüssigkeit, insbesondere Wassers, die in einem Kühl- und Heizkreislauf (5) geführt ist, in dem über einen Vorlauf (3) und einen Rücklauf (4) die Wärmequelle (2) eingebunden ist, wobei der Kühl- und Heizkreislauf (5) einen Klimatisierungszweig (7) und einen Warmwasserzweig (6) aufweist, die über ein erstes Mehrwegeventil (8) mit dem Vorlauf (3) verbunden sind und in den Rücklauf (4) münden, wobei im Klimatisierungszweig (7) mindestens ein Wärmetauscher (13) zum Temperieren eines Raumklimas und im Warmwasserzweig (6) mindestens ein Warmwasserspeicher (9) angeordnet ist, wobei die Heizungsanlage (1) wahlweise in einem der folgenden Modi betrieben wird:
a) Heizmodus, in dem von der Wärmequelle (2) und/oder einem Zuheizer (15) Wärme an die Wärmeträgerflüssigkeit abgegeben und im Klimatisierungszweig (7) über den mindestens einen Wärmetauscher (13) abgegeben wird, wobei der Warmwasserzweig (6) geschlossen ist,
b) Kühlmodus, in dem von der Wärmequelle (2) Wärme von der Wärmeträgerflüssigkeit aufgenommen wird, die im Klimatisierungszweig (7) über den mindestens einen Wärmetauscher an die Wärmeträgerflüssigkeit übertragen wird, wobei der Warmwasserzweig (6) geschlossen ist,
c) Warmwassermodus, in dem von der Wärmequelle (2) und/oder dem Zuheizer (15) Wärme an die Wärmeträgerflüssigkeit abgegeben und im Warmwasserzweig (6) an den Warmwasserspeicher (9) abgegeben wird, wobei der Klimatisierungszweig (7) geschlossen ist,
d) Erster Zwischenmodus zum schnellen Abkühlen der Wärmeträgerflüssigkeit beim Umschalten vom Warmwassermodus in den Kühlmodus, in dem von der Wärmequelle (2) Wärme von der Wärmeträgerflüssigkeit aufgenommen wird, wobei der Warmwasserzweig (6) geschlossen und die Wärmeträgerflüssigkeit durch den Vorlauf (3), mindestens eine Bypassverbindung (14, 17) zwischen Vorlauf (3) und Rücklauf (4) parallel zum Klimatisierungszweig (7), und einen Rücklauf (4) zirkuliert wird,
**gekennzeichnet durch** einen
e) Dritten Zwischenmodus zum Temperieren der Wärmeträgerflüssigkeit beim Umschalten vom Warmwassermodus in den Heizmodus, in dem Wärme von der Wärmequelle (2) und/oder vom Zuheizer (15) an die Wärmeträgerflüssigkeit abgegeben wird, wobei der Warmwasserzweig (6) geschlossen wird und durch den Klimatisierungszweig (7) über die Bypassverbindung (14, 17) eine größere Wärmeträgerflüssigkeitsmenge zirkuliert wird als durch den Rücklauf (4) zur Wärmequelle (2) zurück geführt wird.

2. Verfahren nach Anspruch 1, **dadurch gekennzeichnet, dass** ein zweiter Zwischenmodus zum schnellen Erwärmen der Wärmeträgerflüssigkeit beim Umschalten vom Kühlmodus in den Warmwassermodus vorgesehen ist, in dem von der Wärmequelle (2) und/oder dem Zuheizer (15) Wärme an die Wärmeträgerflüssigkeit abgegeben wird, wobei bei geschlossenem Warmwasserzweig (6) die Wärmeträgerflüssigkeit durch den Vorlauf (3), mindestens eine Bypassverbindung (14, 17) und den Rücklauf (4) zirkuliert wird.

3. Verfahren nach Anspruch 2, **dadurch gekennzeichnet, dass** im ersten Zwischenmodus und/oder im zweiten Zwischenmodus und/oder im dritten Zwischenmodus eine schaltbare Bypassverbindung (17) geöffnet wird.

4. Verfahren nach Anspruch 2, **dadurch gekennzeichnet, dass** im ersten und zweiten Zwischenmodus die zweite im Klimatisierungszweig (7) angeordnete Pumpe (12) gestoppt wird.

5. Verfahren nach einem der Ansprüche 2 bis 4, **dadurch gekennzeichnet, dass** vom zweiten Zwischenmodus in den Warmwassermodus umgeschaltet wird, wenn die Wärmeträgerflüssigkeit im Rücklauf (4) oder im Vorlauf (3) zumindest eine Warmwasserspeichertemperatur erreicht hat.

6. Verfahren nach einem der Ansprüche 2 bis 5, **dadurch gekennzeichnet, dass** im zweiten Zwischenmodus die erste Pumpe (11) zwischen einer Minimalleistung bei einer Temperatur der Wärmeträgerflüssigkeit im Rücklauf (4) unterhalb einer unteren Grenztemperatur und einer Maximalleistung bei einer Temperatur der Wärmeträgerflüssigkeit im Rücklauf (4) oberhalb einer oberen Grenztemperatur betrieben wird, wobei ein Zusammenhang zwischen der Temperatur der Wärmeträgerflüssigkeit im Rücklauf (4) und der Leistung der ersten Pumpe (11) insbesondere linear ist.

7. Verfahren nach einem der Ansprüche 1 bis 6, **dadurch gekennzeichnet, dass** vom ersten Zwischenmodus in den Kühlmodus umgeschaltet wird, wenn eine Temperatur der Wärmeträgerflüssigkeit im Rücklauf (4) oder im Vorlauf (3) um einen vorgebbaren Betrag unterhalb einer Temperatur der Wärmeträgerflüssigkeit im Klimatisierungszweig (7) liegt.

## Claims

1. Method for operating a heating system (1) comprising at least one heat source (2), which can be switched over between a heating mode and a cooling mode, for selectively cooling or heating a heat transfer liquid, in particular water, which is guided in a cooling and heating circuit (5) in which the heat source (2) is incorporated via a feed line (3) and a return line (4), wherein the cooling and heating circuit (5) has an air-conditioning branch (7) and a hot water branch (6) which are connected to the feed line (3) via a first multiway valve (8) and open into the return line (4), wherein at least one heat exchanger (13) for controlling the temperature of an indoor climate is arranged in the air-conditioning branch (7) and at least one hot water tank (9) is arranged in the hot water branch (6), wherein the heating system (1) is selectively operated in one of the following modes:
a) heating mode in which heat is emitted to the heat transfer liquid by the heat source (2) and/or an auxiliary heater (15) and is emitted in the air-conditioning branch (7) via the at least one heat exchanger (13), wherein the hot water branch (6) is closed,
b) cooling mode in which heat is received from the heat transfer liquid by the heat source (2), which heat is transmitted to the heat transfer liquid via the at least one heat exchanger in the air-conditioning branch (7), wherein the hot water branch (6) is closed,
c) hot water mode in which heat is emitted to the heat transfer liquid by the heat source (2) and/or the auxiliary heater (15) and is emitted to the hot water tank (9) in the hot water branch (6), wherein the air-conditioning branch (7) is closed,
d) first intermediate mode for rapidly cooling the heat transfer liquid when a changeover is made from the hot water mode to the cooling mode, in which first intermediate mode heat is received from the heat transfer liquid by the heat source (2), wherein the hot water branch (6) is closed and the heat transfer liquid is circulated through the feed line (3), at least one bypass connection (14, 17) between the feed line (3) and the return line (4) parallel to the air-conditioning branch (7), and a return line (4),
**characterized by** a
e) third intermediate mode for controlling the temperature of the heat transfer liquid when a changeover is made from the hot water mode to the heating mode, in which third intermediate mode heat is emitted to the heat transfer liquid by the heat source (2) and/or by the auxiliary heater (15), wherein the hot water branch (6) is closed and a greater quantity of heat transfer liquid is circulated through the air-conditioning branch (7) via the bypass connection (14, 17) than is returned through the return line (4) to the heat source (2).

2. Method according to Claim 1, **characterized in that** a second intermediate mode is provided for rapidly heating the heat transfer liquid when a changeover is made from the cooling mode to the hot water mode, in which second intermediate mode heat is emitted to the heat transfer liquid by the heat source (2) and/or the auxiliary heater (15), wherein, when the hot water branch (6) is closed, the heat transfer liquid is circulated through the feed line (3), at least one bypass connection (14, 17) and the return line (4).

3. Method according to Claim 2, **characterized in that** a switchable bypass connection (17) is opened in the first intermediate mode and/or in the second intermediate mode and/or in the third intermediate mode.

4. Method according to Claim 2, **characterized in that** the second pump (12), which is arranged in the air-conditioning branch (7), is stopped in the first and second intermediate mode.

5. Method according to one of Claims 2 to 4, **characterized in that** a changeover is made from the second intermediate mode to the hot water mode when the heat transfer liquid in the return line (4) or in the feed line (3) has reached at least a hot water tank temperature.

6. Method according to one of Claims 2 to 5, **characterized in that**, in the second intermediate mode, the first pump (11) is operated between a minimum power at a temperature of the heat transfer liquid in the return line (4) below a lower limit temperature and a maximum power at a temperature of the heat transfer liquid in the return line (4) above an upper limit temperature, wherein a relationship between the temperature of the heat transfer liquid in the return line (4) and the power of the first pump (11) is, in particular, linear.

7. Method according to one of Claims 1 to 6, **characterized in that** a changeover is made from the first intermediate mode to the cooling mode when a temperature of the heat transfer liquid in the return line (4) or in the feed line (3) lies below a temperature of the heat transfer liquid in the air-conditioning branch (7) by a prespecifiable amount.

## Revendications

1. Procédé de fonctionnement d'une installation de chauffage (1), comprenant au moins une source de chaleur (2) pouvant être commutée entre un mode de chauffage et un mode de refroidissement, pour le refroidissement ou le chauffage sélectifs d'un liquide caloporteur, en particulier de l'eau, qui est conduit dans un circuit de refroidissement et de chauffage (5) dans lequel la source de chaleur (2) est incorporée par le biais d'une amenée (3) et d'un retour (4), le circuit de refroidissement et de chauffage (5) présentant une branche de climatisation (7) et une branche d'eau chaude (6) qui sont connectées par le biais d'une première soupape à plusieurs voies (8) à l'amenée (3) et qui débouchent dans le retour (4), au moins un échangeur de chaleur (13) étant disposé dans la branche de climatisation (7) pour réguler un climat intérieur d'un espace et au moins un accumulateur d'eau chaude (9) étant disposé dans la branche d'eau chaude (6), l'installation de chauffage (1) fonctionnant de manière sélective dans l'un des modes suivants :
a) un mode de chauffage dans lequel de la chaleur est transmise au liquide caloporteur depuis la source de chaleur (2) et/ou depuis un chauffage d'appoint (15) et est transférée dans la branche de climatisation (7) par le biais de l'au moins un échangeur de chaleur (13), la branche d'eau chaude (6) étant fermée,
b) un mode de refroidissement dans lequel de la chaleur provenant de la source de chaleur (2) est reçue par le liquide caloporteur, laquelle est transmise dans la branche de climatisation (7) par le biais de l'au moins un échangeur de chaleur au liquide caloporteur, la branche d'eau chaude (6) étant fermée,
c) un mode d'eau chaude, dans lequel la chaleur provenant de la source de chaleur (2) et/ou du chauffage d'appoint (15) est transmise au liquide caloporteur et est transmise dans la branche d'eau chaude (6) à l'accumulateur d'eau chaude (9), la branche de climatisation (7) étant fermée,
d) un premier mode intermédiaire pour refroidir rapidement le liquide caloporteur lors de la commutation du mode d'eau chaude au mode de refroidissement, dans lequel la chaleur provenant de la source de chaleur (2) est reçue par le liquide caloporteur, la branche d'eau chaude (6) étant fermée et le liquide caloporteur circulant à travers l'amenée (3), au moins une connexion de dérivation (14, 17) entre l'amenée (3) et le retour (4) parallèlement à la branche de climatisation (7), et un retour (4), **caractérisé par**
e) un troisième mode intermédiaire pour réguler la température du liquide caloporteur lors de la commutation du mode d'eau chaude au mode de chauffage, dans lequel la chaleur provenant de la source de chaleur (2) et/ou du chauffage d'appoint (15) est transmise au liquide caloporteur, la branche d'eau chaude (6) étant fermée et une plus grande quantité de liquide caloporteur circulant à travers la branche de climatisation (7) par le biais de la connexion de dérivation (14, 17) que la quantité renvoyée à travers le retour (4) vers la source de chaleur (2) .

2. Procédé selon la revendication 1, **caractérisé en ce qu'**un deuxième mode intermédiaire est prévu pour chauffer rapidement le liquide caloporteur lors de la commutation du mode de refroidissement au mode d'eau chaude, dans lequel la chaleur provenant de la source de chaleur (2) et/ou du chauffage d'appoint (15) est transmise au liquide caloporteur, le liquide caloporteur, lorsque la branche d'eau chaude (6) est fermée, circulant à travers l'amenée (3), au moins une connexion de dérivation (14, 17) et le retour (4).

3. Procédé selon la revendication 2, **caractérisé en ce que** dans le premier mode intermédiaire et/ou dans le deuxième mode intermédiaire et/ou dans le troisième mode intermédiaire, une connexion de dérivation commutable (17) est ouverte.

4. Procédé selon la revendication 2, **caractérisé en ce que** dans le premier et le deuxième mode intermédiaire, la deuxième pompe (12) disposée dans la branche de climatisation (7) est arrêtée.

5. Procédé selon l'une quelconque des revendications 2 à 4, **caractérisé en ce que** l'on commute du deuxième mode intermédiaire au mode d'eau chaude lorsque le liquide caloporteur dans le retour (4) ou dans l'amenée (3) a atteint au moins une température d'accumulateur d'eau chaude.

6. Procédé selon l'une quelconque des revendications 2 à 5, **caractérisé en ce que** dans le deuxième mode intermédiaire, la première pompe (11) fonctionne entre une puissance minimale à une température du liquide caloporteur dans le retour (4) en dessous d'une température limite inférieure et une puissance maximale à une température du liquide caloporteur dans le retour (4) au-dessus d'une température limite supérieure, une corrélation entre la température du liquide caloporteur dans le retour (4) et la puissance de la première pompe (11) étant notamment linéaire.

7. Procédé selon l'une quelconque des revendications 1 à 6, **caractérisé en ce que** l'on commute du premier mode intermédiaire au mode de refroidissement lorsqu'une température du liquide caloporteur dans le retour (4) ou dans l'amenée (3) est inférieure d'une valeur prédéfinissable à une température du liquide caloporteur dans la branche de climatisation (7) .
